# EUROPÄISCHE PATENTANMELDUNG

(11) **EP 0 844 156 A1**
(43) Veröffentlichungstag der Anmeldung: **27.05.1998**
(21) Anmeldenummer: 97120358.3
(22) Anmeldetag: 20.11.1997
(51) Int. Cl.: B60T 11/06

(54) **Ausgleichsvorrichtung für ein Seilzug-Bremssystem**

(30) Priorität: 21.11.1996 DE 19648222; 26.03.1997 DE 19712594
(71) Anmelder: KÜSTER & Co. GmbH, 35630 Ehringshausen (DE)
(72) Erfinder: Gutiérrez, Carmelo, 35630 Ehringshausen-Katzenfurt (DE)
(74) Vertreter: Müller, Eckhard, Dr.

(57) **Zusammenfassung**

Es wird eine Ausgleichsvorrichtung (5) für ein mit Betätigungszügen, insbesondere Bremszügen betätigbares Bremssystem beschrieben, wobei die Ausgleichsvorrichtung (5) einerseits mit einem zu einem Betätigungshebel o. dgl. führenden Betätigungszug (2) und andererseits mit wenigstens zwei zu den Bremsen führenden Bremszügen (91, 92) in Verbindung steht. Die Ausgleichsvorrichtung (5) weist ein mit dem Betätigungszug (2) verbundenes Halteelement (6) auf, an dem wenigstens zwei Zahnstangen (51, 52) o. dgl. verschiebbar und um eine Querachse (7) schwenkbar angeordnet sind. Die Zahnstangen (51, 52) kämmen mit einem an dem Halteelement (6) drehbar gelagerten Zahnrad (4) und stehen jeweils mit einem Bremszug (91, 92) in Wirkverbindung.

## Beschreibung

Die Erfindung bezieht sich auf eine Ausgleichsvorrichtung für ein mit Betätigungszügen, insbesondere Bremszügen betätigbares Bremssystem, insbesondere einem Feststellbremssystem für Kraftfahrzeuge, wobei die Ausgleichsvorrichtung einerseits mit einem Zu einem Betätigungshebel o. dgl. führenden Betätigungszug und andererseits mit wenigstens zwei zu den Bremsen führenden Bremszügen in Verbindung steht.

Diese bekannte Ausgleichsvorrichtung wird bspw. bei Handbremszügen für Kraftfahrzeuge eingesetzt, wobei von den hinteren Bremsen Seilzüge zu der drehbeweglich angeordneten Ausgleichsvorrichtung führen, welche ihrerseits mit dem Betätigungshebel bzw. mit einer Fußfeststellbremse in Wirkstellung tritt. Die drehbewegliche Ausgleichsvorrichtung dient dazu, Langenunterschiede zwischen den beiden zu den Bremsen führenden Bremszügen auszugleichen. Diese Toleranzen sind bedingt durch das Widerlager für die Bremszüge bzw. Betätigungszüge am Fahrzeug selbst, aber auch durch Fertigungstoleranzen in der Länge der Bremszüge.

Ein Nachteil der bekannten Ausgleichsvorrichtung besteht darin, daß nicht immer ein entsprechender Längenausgleich durchführbar ist, wodurch sich ein unterschiedliches Bremsverhalten der beiden zu betätigenden Bremsen ergibt. Im übrigen besteht das Problem, daß im Falle einer Schrägstellung der Ausgleichsvorrichtung stets Querkräfte bei der Betätigung des Feststellbremssystems auftreten. Diese Querkräfte beeinträchtigen eine gleichmäßige Bremswirkung der zu betätigenden Bremsen und können sich unter Umständen auch nachteilig auf die Lebensdauer der Bremszüge bzw. Betätigungszüge auswirken. Schließlich weisen die bekannten Ausgleichsvorrichtungen einen nur auf relativ geringe Seillängenunterschiede beschränkten Ausgleichsbereich auf.

Demgegenüber liegt der Erfindung die Aufgabe zugrunde, eine verbesserte Ausgleichsvorrichtung zu schaffen. Insbesondere sollen ein Auftreten von Querkräften bei der Betätigung der Feststellbremse vermieden und größere Seillängenunterschiede mittels der Ausgleichsvorrichtung ausgeglichen werden.

Diese Aufgabe wird nach der Erfindung durch die Ausgleichsvorrichtung mit den eingangs genannten Merkmalen i. w. dadurch gelöst, daß ein mit dem Betätigungszug verbundenes Halteelement vorgesehen ist, an dem wenigstens zwei Zahnstangen o. dgl. verschiebbar und um eine Querachse schwenkbar angeordnet sind, wobei die Zahnstangen mit einem an dem Halteelement drehbar gelagerten Zahnrad, Ritzel o. dgl. kämmen und jeweils mit einem Bremszug in Wirkverbindung stehen.

Durch die Erfindung wird zum einen erreicht, daß auf die Ausgleichsvorrichtung wirkende Querkräfte weitestgehend vermieden werden, da die beiden Zahnstangen frei verschwenkbar an einer Querachse der Ausgleichsvorrichtung angeordnet sind. Durch die Kopplung der beiden Zahnstangen mittels des Zahnrades, Ritzels o. dgl. ist ein Ausgleich von größeren Seillängenunterschieden als mit den bisher bekannten Vorrichtungen möglich. Ein etwaig vorhandener Längenunterschied zwischen den beiden Bremszügen wird durch die erfindungsgemäße Ausgleichsvorrichtung selbsttätig und sicher ausgeglichen, so daß ein verbessertes Bremsverhalten der durch die Feststellbremse betätigen Bremsen erzielbar ist.

Nach einer ersten, konstruktiv besonders einfachen Ausführungsform ist das Halteelement als Gabelkopf o. dgl. mit zwei Schenkeln ausgebildet und der Betätigungszug an einem gemeinsamen Verbindungssteg angelenkt. Zum einen ergibt sich hierdurch eine einfache Möglichkeit der Verbindung des Betätigungszuges mit dem Halteelement während andererseits die Voraussetzungen für eine einfache und sichere Lagerung des Zahnrades, Ritzels o. dgl. an dem Halteelement geschaffen sind.

Dabei hat es sich als vorteilhaft erwiesen, daß das Zahnrad drehbar auf einer Achse zwischen den Schenkeln angeordnet und die Achse in Aufnahmen an den Schenkeln gelagert ist.

Gemäß einer anderen, äußerst vorteilhaften Weiterbildung der Erfindung sind die Zahnstangen i. w. in einem spitzen Schwenkwinkel zueinander ausgerichtet und kämmen auf i. w. einander gegenüberliegenden Umfangsabschnitten des Zahnrades, Ritzels o. dgl. mit dessen Verzahnung. Aufgrund dieser Anordnung ist für eine sichere Antriebskopplung der beiden Zahnstangen Sorge getragen.

Dabei hat es sich als besonders vorteilhaft herausgestellt, daß die Zahnstangen um eine gemeinsame Querachse schwenkbar sind, die mit der Achse des Zahnrades i. w. zusammenfällt. Hierdurch wird sichergestellt, daß die Verzahnungen der Zahnstangen für jede, in der Praxis sinnvolle Winkellage der Zahnstangen zueinander mit der Verzahnung des Zahnrades, Ritzels o. dgl. kämmen und somit eine Antriebskopplung zwischen dem Zahnrad und den Zahnstangen für unterschiedliche Winkellagen der Zahnstangen gegeben ist.

Aus konstruktiver bzw. fertigungstechnischer Sicht hat es sich als vorteilhaft erwiesen, daß die Zahnstangen jeweils mit einer Halteplatte verbunden sind.

Die Halteplatte weist von Vorteil ein Langloch o. dgl. Durchbrechung auf, so daß die Voraussetzung für eine Verschiebbarkeit und Verschwenkbarkeit der Halteplatte geschaffen ist.

Zur Festlegung der Halteplatten an dem Halteelement der Ausgleichsvorrichtung ist die Achse für das Zahnrad, Ritzel o. dgl. durch das Langloch der Halteplatte gesteckt.

Von Vorteil sind nach einer anderen Ausgestaltung der Erfindung die Halteplatten jeweils benachbart beidseitig des Zahnrades zwischen den Schenkeln des Gabelkopfes bzw. Halteelements auf der Achse gelagert. Aufgrund dieser Maßnahme sind die verschwenkbaren und verschiebbaren Halteplatten sicher an dem Halteelement bzw. dem Gabelkopf festgelegt.

Nach einer anderen vorteilhaften Weiterbildung der Erfindung weisen die Halteplatten jeweils eine randseitige Abwinklung einer Längskante auf, die das Zahnrad übergreift und sich an der anderen Halteplatte abstützt. Diese Abwinklung, die sich an der jeweils anderen Halteplatte abstützt, sorgt für eine gegenseitige Führung der beiden Halteplatten in Richtung der Querachse.

Aus fertigungstechnischer Sicht hat es sich als besonders vorteilhaft herausgestellt, daß die Halteplatten baugleich ausgebildet sind. Die bevorzugt paarweise zum Einsatz kommenden Halteplatten können somit nach dem gleichen Herstellungsprozeß gefertigt werden, wobei lediglich bei der Montage der Ausgleichsvorrichtung darauf zu achten ist, daß die eine Halteplatte in einer bzgl. der anderen Halteplatte um 180° bezogen auf eine Längsachse gedrehten Position montiert wird.

Weiterhin weist die Halteplatte eine Kammer o. dgl. Ausnehmung für einen Nippel o. dgl. Anschlußelement der Bremszüge zur Verbindung der Bremszüge mit der Halteplatte auf. Somit sind bei der Montage der Ausgleichsvorrichtung lediglich die an den Enden der Bremszüge vorgesehenen Nippel in die Nippelkammer einzulegen, wodurch die Ausgleichsvorrichtung in Wirkverbindung mit den Bremsen des Fahrzeuges treten kann.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: in schematischer Darstellung eine Seitenansicht eines Ausführungsbeispiels der erfindungsgemäßen Ausgleichsvorrichtung, wobei ein Schenkel des Halteelements zur Verdeutlichung nicht dargestellt ist und
- Figur 2: eine Draufsicht der Ausgleichsvorrichtung der Figur 1.

Die in den Figuren dargestellte Ausgleichsvorrichtung 5 weist einen Gabelkopf 1 auf, der i. w. ein U-förmiges Profil mit zwei Schenkeln 11, 12 und einem die Schenkel 11, 12 verbindenden Verbindungssteg 13 besitzt. An dem Verbindungssteg 13 ist ein mechanischer Betätigungszug 2 angelenkt, der an einen Handhebel oder Fußhebel der Feststellbremse führt. Das durch den Gabelkopf 1 gebildete Halteelement 6 dient weiterhin der Befestigung von zwei Halteplatten 61, 62. Hierzu ist in Richtung einer Querachse 7 eine Achse 3 in Bohrungen der Schenkel 11, 12 gesteckt. Auf der Achse 3 ist ein Zahnrad 4 oder ein Ritzel drehbar gelagert. Die Halteplatten 61, 62 sind jeweils mit einer Zahnstange 51, 52 versehen, wobei die Zahnungen der Zahnstangen 51, 52 auf i. w. einander gegenüberliegenden Umfangsabschnitten des Zahnrades 4 mit dessen Verzahnung kämmen.

Weiterhin weisen die Halteplatten 61, 62 jeweils ein Langloch 71, 72 auf, durch welches die Achse 3 gesteckt ist. Insgesamt sind somit die Halteplatten 61, 62 bzw. die daran festgelegten Zahnstangen 51, 52 bzgl. der Querachse 7 des Halteelements 6 verschiebbar und verschwenkbar gelagert.

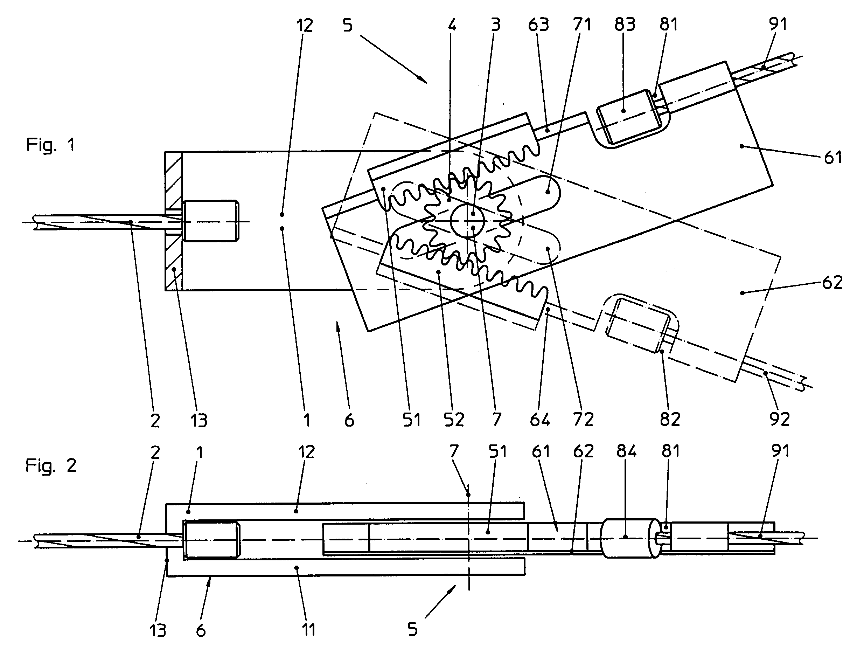

Wie insbesondere aus Figur 1 ersichtlich ist, sind die Zahnstangen 51, 52 i. w. in einem spitzen Schwenkwinkel zueinander ausgerichtet und kämmen mit dem Zahnrad 4. Weiterhin sind die Halteplatten 61, 62 jeweils benachbart beidseitig des Zahnrades 4 zwischen den Schenkeln 11, 12 des Gabelkopfes 1 auf der Achse 3 gelagert. Die Halteplatten 61, 62 weisen jeweils eine randseitige Abwinklung 63, 64 einer Längskante auf, wobei dies Abwinklung 63, 64 das Zahnrad 4 i. w. übergreift und sich an der anderen Halteplatte 61, 62 abstützt. Insbesondere sind die beiden Halteplatten 61, 62 baugleich ausgebildet.

Jede der Halteplatten 61, 62 weist jeweils eine Kammer 81, 82 o. dgl. Ausnehmung für ein Anschlußelement, insbesondere einen Nippel 83, 84 der Bremszüge 91, 92 auf. Zur Verbindung der Halteplatten 61, 62 mit den zu den Bremsen führenden Bremszügen 91, 92 sind die Nippel 83, 84 lediglich in die Nippelkammern 81, 82 einzulegen.

Die Funktionsweise der Ausgleichsvorrichtung 5 ist wie folgt:
Wird zur Betätigung der Feststellbremse der Betätigungszug 2 in den Figuren nach links bewegt, so wird diese Bewegung von dem Halteelement 6 auch auf die Halteplatten 61, 62 übertragen. Unterstellt man einmal, daß der Bremszug 91 bspw. aufgrund von Toleranzen o. dgl. eine geringere Länge als der Bremszug 92 aufweist, so wird nach entsprechender Verschiebung des Halteelements 6 auch der Bremszug 91 unter Spannung stehen, so daß die Halteplatte 61 der Bewegung des Halteelements 6 nach links nicht weiter folgen kann. Zu diesem Zeitpunkt ist der Bremszug 92 noch nicht gespannt. Dementsprechend wird das Zahnrad 4 auf der nun bzgl. des Fahrzeuges ortsfesten Zahnstange 51 nach links abrollen, wodurch auch die Zahnstange 52 bzw. die Halteplatte 62 nach links verschoben wird, bis auch der Bremszug 92 unter Spannung steht. Der maximale Verschiebeweg der Halteplatten 61 bzw. 62 bzgl. des Halteelements 6 wird letztlich durch die Länge der Langlöcher 71, 72 beschränkt. Der individuelle Verschiebeweg der Halteplatten 61, 62 hängt dagegen von den Längenunterschieden der Bremszüge 91, 92 ab.

Durch die erfindungsgemäße Ausgleichsvorrichtung wird somit selbsttätig ein Kräftegleichgewicht zwischen den Bremszügen 91, 92 hergestellt, so daß auch die auf die zu betätigenden Bremsen wirkenden Kräfte i. w. gleich sind. Längentoleranzen in den Bremszügen werden auch selbsttätig ausgeglichen. Darüber hinaus bewirkt die erfindungsgemäße Ausgleichsvorrichtung eine Ausgleichsfunktion, wobei Einflüsse der Ausgleichsvorrichtung 5 auf den Ausgleichsvorgang i. w. ausgeschlossen sind. Insbesondere ist vermieden, daß nachteilige Winkel- bzw. Kraftkomponenten abweichend von den Längsachsen der Bremszüge 91, 92 auftreten. Hieraus resultiert eine weiterhin verbesserte und vergleichmäßigte Bremswirkung über die gesamte Fahrzeuglebensdauer. Selbst bei einem nicht parallelen Austritt der Betätigungszüge bzw. Bremszüge 91, 92 aus der Ausgleichsvorrichtung 5 ist eine äußerst gleichmäßige Kraftverteilung auf die beiden Bremszüge 91, 92 gegeben. Darüber hinaus sind mittels der erfindungsgemäßen Ausgleichsvorrichtung 5 größere Seillängenunterschiede kompensierbar als bei den herkömmlichen Vorrichtungen.

### Bezugszeichenliste

- 1 -: Gabelkopf
- 2 -: Betätigungszug, Bremszug
- 3 -: Achse
- 4 -: Ritzel, Zahnrad
- 5 -: Ausgleichsvorrichtung
- 6 -: Halteelement
- 7 -: Querachse
- 11 -: Schenkel
- 12 -: Schenkel
- 13 -: Verbindungssteg
- 51 -: Zahnstange
- 52 -: Zahnstange
- 61 -: Halteplatte
- 62 -: Halteplatte
- 63 -: Abwinklung
- 64 -: Abwinklung
- 71 -: Langloch
- 72 -: Langloch
- 81 -: Kammer, Aufnahme
- 82 -: Kammer, Aufnahme
- 83 -: Nippel, Anschlußelement
- 84 -: Nippel, Anschlußelement
- 91 -: Bremszug
- 92 -: Bremszug

## Patentansprüche

1. Ausgleichsvorrichtung (5) für ein mit Betätigungszügen, insbesondere Bremszügen betätigbares Bremssystem, insbesondere ein Feststellbremssystem für Kraftfahrzeuge, wobei die Ausgleichsvorrichtung (5) einerseits mit einem zu einem Betätigungshebel o. dgl. führenden Betätigungszug (2) und andererseits mit wenigstens zwei zu den Bremsen führenden Bremszügen (91, 92) in Verbindung steht, dadurch gekennzeichnet, daß die Ausgleichsvorrichtung (5) ein mit dem Betätigungszug (2) verbundenes Halteelement (6) aufweist, an dem wenigstens zwei Zahnstangen (51, 52) o. dgl. verschiebbar und um eine Querachse (7) schwenkbar angeordnet sind, wobei die Zahnstangen (51, 52) mit einem an dem Halteelement (6) drehbar gelagerten Zahnrad (4), Ritzel o. dgl. kämmen und jeweils mit einem Bremszug (91, 92) in Wirkverbindung stehen.

2. Vorrichtung nach Anspruch 1, dadurch gekennzeichnet, daß das Halteelement (6) als Gabelkopf (1) mit zwei Schenkeln (11, 12) ausgebildet und der Betätigungszug (2) an einem gemeinsamen Verbindungssteg (13) angelenkt sind.

3. Vorrichtung nach Anspruch 2, dadurch gekennzeichnet, daß das Zahnrad (4) drehbar auf einer Achse (3) zwischen den Schenkeln (11, 12) angeordnet und die Achse (3) in Aufnahmen an den Schenkeln (11, 12) gelagert ist.

4. Vorrichtung nach einem der vorhergehenden Ansprüche, dadurch gekennzeichnet, daß die Zahnstangen (51, 52) i. w. in einem spitzen Schwenkwinkel zueinander ausgerichtet sind und auf i. w. einander gegenüberliegenden Umfangsabschnitten des Zahnrades (4) mit dessen Verzahnung kämmen.

5. Vorrichtung nach einem der vorhergehenden Ansprüche, dadurch gekennzeichnet, daß die Zahnstangen (51, 52) um eine gemeinsame Querachse (7) schwenkbar sind, die mit der Achse (3) des Zahnrades (4) i. w. zusammenfällt.

6. Vorrichtung nach einem der vorhergehenden Ansprüche, dadurch gekennzeichnet, daß die Zahnstangen (51, 52) jeweils mit einer Halteplatte (61, 62) verbunden sind.

7. Vorrichtung nach Anspruch 6, dadurch gekennzeichnet, daß die Halteplatte (61, 62) ein Langloch (71, 72) o. dgl. Durchbrechung aufweisen.

8. Vorrichtung nach einem der Ansprüche 6 oder 7, dadurch gekennzeichnet, daß die Achse (3) durch das Langloch (71, 72) gesteckt ist.

9. Vorrichtung nach einem der Ansprüche 6 bis 8, dadurch gekennzeichnet, daß die Halteplatten (61, 62) jeweils benachbart beidseitig des Zahnrades (4) zwischen den Schenkeln (11, 12) des Gabelkopfes (1) auf der Achse gelagert sind.

10. Vorrichtung nach einem der Ansprüche 6 bis 9, dadurch gekennzeichnet, daß die Halteplatten (61, 62) jeweils eine randseitige Abwinklung (63, 64) einer Längskante aufweisen, die das Zahnrad (4) übergreift und sich an der anderen Halteplatte (61, 62) abstützt.

11. Vorrichtung nach einem der Ansprüche 6 bis 10, dadurch gekennzeichnet, daß die Halteplatten (61, 62) baugleich ausgebildet sind.

12. Vorrichtung nach einem der Ansprüche 6 bis 11, dadurch gekennzeichnet, daß die Halteplatte (61, 62) jeweils eine Kammer (81, 82) o. dgl. Ausnehmung für einen Nippel (83, 84) o. dgl. Anschlußelement der Bremszüge (91, 92) zur deren Verbindung mit den Halteplatten (61, 62) aufweisen.
